# EUROPÄISCHE PATENTSCHRIFT

(11) **EP 1 477 697 B1**
(45) Veröffentlichungstag und Bekanntmachung des Hinweises auf die Patenterteilung: **27.06.2007**
(21) Anmeldenummer: 04010640.3
(22) Anmeldetag: 05.05.2004
(51) Int. Cl.: F16D 13/71

(54) **Druckplattenbaugruppe für eine Reibungskupplung**
Pressure plate assembly for friction clutch
Ensemble plateau de pression pour un embrayage à friction

(30) Priorität: 10.05.2003 DE 10321008
(43) Veröffentlichungstag der Anmeldung: 17.11.2004
(73) Patentinhaber: ZF Sachs AG, 97424 Schweinfurt (DE)
(72) Erfinder: Stark, Erich, 97450 Arnstein-Gänheim (DE); Berck, Rüdiger, 97464 Niederwerrn (DE); Stahl, Reinhard, 97502 Euerbach (DE); Grünewald, Oswald, 97532 Üchtelhausen (DE); Hetterich, Markus, 97520 Heidenfeld (DE); Schubert, Thomas, 97508 Grettstadt (DE); Pfeifer, Jürgen, 97469 Gochsheim (DE); Mensch, Waldemar, 97422 Schweinfurt (DE); Vogt, Sebastian, 97616 Bad Neustadt (DE); Orlamünder, Andreas, 97422 Schweinfurt (DE)

(56) Entgegenhaltungen:
- DE-A1- 10 025 532
- FR-A- 2 339 099
- US-B1- 6 311 816

## Beschreibung

Die vorliegende Erfindung betrifft eine Reibungskupplung, umfassend eine Druckplattenbaugruppe für eine Reibungskupplung, umfassend eine Gehäuseanordnung, welche mit einer Schwungmassenanordnung zur gemeinsamen Drehung um eine Drehachse verbunden oder verbindbar ist und welche einen ringartigen Bodenbereich sowie eine Mehrzahl von sich von dem ringartigen Bodenbereich weg erstreckenden und einen gegenseitigen Umfangsabstand aufweisenden Verbindungsstegen aufweist, die in einem von dem Bodenbereich entfernten axialen Endbereich zur Anlage an der Schwungmassenanordnung vorgesehen sind, wenigstens eine Beaufschlagungsplatte, die eine Mehrzahl von jeweils zwischen zwei Verbindungsstege eingreifenden Drehkopplungsvorsprüngen aufweist, eine sich bezüglich des Bodenbereichs der Gehäuseanordnung abstützende Kraftbeaufschlagungsanordnung, durch welche die wenigstens eine Beaufschlagungsplatte in gegenseitige Anlage mit wenigstens einer Kupplungsscheibenanordnung bringbar ist sowie eine im Wesentlichen ringscheibenartige Schwungmassenanordnung.

Aus der DE 100 25 535 A1 ist eine Reibungskupplung der Eingangs genannten Art bekannt, bei der eine Druckplattenbaugruppe mit einer Gehäuseanordnung, welche mit einer Schwungmassenanordnung zur gemeinsamen Drehung um eine Drehachse verbunden oder verbindbar ist und welche einen ringartigen Bodenbereich sowie eine Mehrzahl von sich von dem ringartigen Bodenbereich weg erstreckenden und einen gegenseitigen Umfangsabstand aufweisenden Verbindungsstegen aufweist, die in einem von dem Bodenbereich entfernten axialen Endbereich zur Anlage an der Schwungmassenanordnung vorgesehen sind, wenigstens einer Beaufschlagungsplatte, die eine Mehrzahl von jeweils zwischen zwei Verbindungsstege eingreifenden Drehkopplungsvorsprüngen aufweist, eine sich bezüglich des Bodenbereichs der Gehäuseanordnung abstützende Kraftbeaufschlagungsanordnung, durch welche die wenigstens eine Beaufschlagungsplatte in gegenseitige Anlage mit wenigstens einer Kupplungsscheibenanordnung bringbar ist.

Bei derartigen Druckplattenbaugruppen, die insbesondere für Reibungskupplungen des Mehrscheibentyps Anwendung finden, ist die Gehäuseanordnung im Allgemeinen aus Blechmaterial aufgebaut, d.h., es wird ein Blechrohling gestanzt, welcher bereits den ringartigen Bodenbereich und zum Bilden der Verbindungsstege zunächst nach radial außen vom ringartigen Bodenbereich abstehende Ansätze aufweist. Diese Ansätze werden dann umgebogen bzw. verformt, so dass die Gehäuseanordnung mit ihrer vorgesehenen Formgebung bereitgestellt wird. Obgleich auf diese Art und Weise diese Gehäuseanordnung sehr einfach herstellbar ist, weist sie das inhärente Problem auf, dass die auch auf Grund der Notwendigkeit, ein vergleichsweise leicht und gut verformbares Material einsetzen zu müssen, eine ebenso vergleichsweise geringe Stabilität aufweist. Dies macht sich in verschiedenen Bereichen bemerkbar. Wenn die bezüglich des ringartigen Bodenbereichs sich abstützende Kraftbeaufschlagungsanordnung, also beispielsweise ein nach Art einer Membranfeder oder dergleichen aufgebauter Kraftspeicher, mit der Gehäuseanordnung verbunden wird, besteht die große Gefahr, dass zumindest geringfügige Verformungen in der Gehäuseanordnung erzeugt werden. Diese Verformungen führen dazu, dass die zur Anlage an der Schwungmassenanordnung vorgesehenen Stirnflächen der Verbindungsstege bezüglich einander verschoben werden, so dass nicht alle dieser Stirnflächen bei der Anbringung der Druckplattenbaugruppe an der Schwungmassenanordnung in geeigneten Anlagekontakt mit der Schwungmassenanordnung treten können. Es wird daher erforderlich, zumindest einige dieser Verbindungsstege im Bereich ihrer zur Anlage an der Schwungmassenanordnung vorgesehenen Stirnflächen nachzuarbeiten, beispielsweise abzudrehen, wobei bei diesem Nachbearbeitungsvorgang die mangelende interne Stabilität der Gehäuseanordnung insbesondere im Bereich der Verbindungsstege wieder nachteilhaft zu tragen kommt. Weiterhin kann es zur Radialabstützung dieser Verbindungsstege erforderlich sein, an der Schwungmassenanordnung, die im Allgemeinen als massives Metallbauteil hergestellt ist, durch spanbahebende Bearbeitung Radialabstützbereiche bereitzuhalten.

Es ist das Ziel der vorliegenden Erfindung, eine Druckplattenbaugruppe für eine Reibungskupplung bereitzustellen, die bei vergleichsweise einfachem Aufbau im Bereich der Gehäuseanordnung bestehende Stabilitätsprobleme mindert.

Gemäß der vorliegenden Erfindung wird diese Aufgabe gelöst durch eine Reibungskupplung, umfassend eine Druckplattenbaugruppe, eine Gehäuseanordnung, welche mit einer Schwungmassenanordnung zur gemeinsamen Drehung um eine Drehachse verbunden oder verbindbar ist und welche einen ringartigen Bodenbereich sowie eine Mehrzahl von sich von dem ringartigen Bodenbereich weg erstreckenden und einen gegenseitigen Umfangsabstand aufweisenden Verbindungsstegen aufweist, die in einem von dem Bodenbereich entfernten axialen Endbereich zur Anlage an der Schwungmassenanordnung vorgesehen sind, wenigstens eine Beaufschlagungsplatte, die eine Mehrzahl von jeweils zwischen zwei Verbindungsstege eingreifenden Drehkopplungsvorsprüngen aufweist, eine sich bezüglich des Bodenbereichs der Gehäuseanordnung abstützende Kraftbeaufschlagungsanordnung, durch welche die wenigstens eine Beaufschlagungsplatte in gegenseitige Anlage mit wenigstens einer Kupplungsscheibenanordnung bringbar ist, sowie eine im Wesentlichen ringscheibenartige Schwungmassenanordnung ferner umfassend ein ringartiges Stützelement, das wenigstens einen Teil der Verbindungsstege an ihrer Außenumfangsseite umgibt und daran in Anlage ist und eine Mehrzahl von Aussparungen (64) aufweist, wobei die Schwungmassenanordnung (60) eine Mehrzahl von Zentrieröffnungen für eine jeweilige Aussparung (64) in dem Stützelement (58) durchsetzende Zentrierelemente aufweist.

Das bei der erfindungsgemäßen Reibungskupplung vorgesehene ringartige Stützelement erfüllt eine Mehrzahl von sich im Betrieb bzw. bei der Montage vorteilhaft auswirkenden Aspekten. Zunächst stellt es eine Kopplung zwischen den einzelnen Verbindungsstegen dar, so dass diese nicht nur über ihre gemeinsame Anbindung an den Bodenbereich sonderen auch über das Stützelement miteinander verbunden sind. Dies führt zu einer Gesamtversteifung der Gehäuseanordnung mit der Folge, dass auch die Anbringung der Kraftbeaufschlagungsanordnung und deren Krafteinwirkung nur eine deutlich geminderte Verformungswirkung der Gehäuseanordnung zur Folge haben kann. Durch diese geminderte Verformung wird ebenso der vorangehend angesprochene Nachbearbeitungsvorgang im Bereich der zur Anlage an der Schwungmassenanordnung vorgesehenen Stirnseiten der Verbindungsstege, welche Nachbearbeitung auch durch eine mangelnde Präzision beim Stanzvorgang des Blechrohlings für die Gehäuseanordnung erforderlich werden kann, nur noch in einem geringeren Ausmaß erforderlich sein und überdies leichter durchzuführen sein, da durch die Kopplung der Verbindungsstege untereinander auch hier die erhöhte Steifigkeit der gesamten Gehäuseanordnung sich vorteilhaft bemerkbar machen wird

Das erfindungsgemäß vorzusehende Stützelement weist eine Mehrzahl von Aussparungen auf. Diese Aussparungen haben einerseits die Funktion, das Gesamtgewicht dieses Stützelements zu mindern. Andererseites können sie dazu dienen, Auswuchtmassen aufzunehmen, so dass vor oder nach dem Zusammenfügen der Druckplattenbaugruppe mit einer Schwungmassenanordnung in einem Auswuchtvorgang nach Ermittlung derjenigen Bereiche, in welchen Auswuchtmassen vorzusehen sind, kleine beispielsweise stift- oder bolzenartig ausgestaltete Auswuchtmassen in diese Aussparungen, die lochartig ausgebildet sein können, eingesetzt werden können.

Um die durch das erfindungsgemäß vorzusehende Stützelement eingeführte Versteifung der Gehäuseanordnung sehr effizient bereitstellen zu können, wird weiter vorgeschlagen, dass das Stützelement in dem vom Bodenbereich entfernten axialen Endbereich der Verbindungsstege vorgesehen ist. Weiter kann die Versteifungswirkung dadurch noch verbessert werden, dass das Stützelement mit mehreren der Verbindungsstege fest verbunden ist. Beispielsweise kann das Stützelement mit diesen Verbindungsstegen verschweißt sein.

Bei einer alternativen Ausgestaltungsform kann die feste Kopplung der Verbindungsstege mit dem Stützelement dadurch erlangt werden, dass das Stützelement einen Kreisring bildet und an den Außenumfangsseiten der Verbindungsstege diese nach radial innen beaufschlagend anliegt. Auch durch die radial Beaufschlagung, die einer Aufspreiztendenz der Verbindungsstege nach radial außen entgegenwirken kann, kann ein zur Erhöhung der Steifigkeit führender Verbindungseffekt erlangt werden. Beispielsweise kann vorgesehen sein, dass das Stützelement auf die Gehäuseanordnung aufgeschrumpft ist.

Alternativ dazu kann das Stützelement ungebohrt sein und durch gezieltes Bohren die Unwucht der ZSB kompensiert werden.

Insbesondere dann, wenn wenigstens ein Teil der Aussparungen das Stützelement axial vollständig durchdringt, können in diese Aussparungen eingesetzte stiftartige Elemente auch in zugehörige Öffnungen oder Aussparungen der Schwungmassenanordnung eingesetzt werden, so dass das erfindungsgemäß vorgesehene Stützelement weiterhin die Funktion übernehmen kann, die Druckplattenbaugruppe bezüglich der Schwungmassenanordnung zu zentrieren, bevor eine feste Verschraubung dieser beiden Systembereiche erfolgt.

Die Erfindung wird nachfolgend mit Bezug auf die beiliegenden Zeichnungen anhand bevorzugter Ausgestaltungsformen detailliert beschrieben. Es zeigt:
- Fig. 1: eine perspektivische Teil-Ansicht einer Druckplattenbaugruppe, bei welcher die Prinzipien der Erfindung verwirklicht sein können;
- Fig. 2: die Druckplattenbaugruppe der Fig. 1 in Teil-Längsschnittansicht;
- Fig. 3: die Gehäuseanordnung der erfindungsgemäß aufgebauten Druckplattenbaugruppe in Verbindung mit einem Stützring;
- Fig. 4: eine vergrößerte perspektivische Teilansicht der in Fig. 3 dargestellten Gehäuseanordnung mit einer Schwungmassenanordnung.

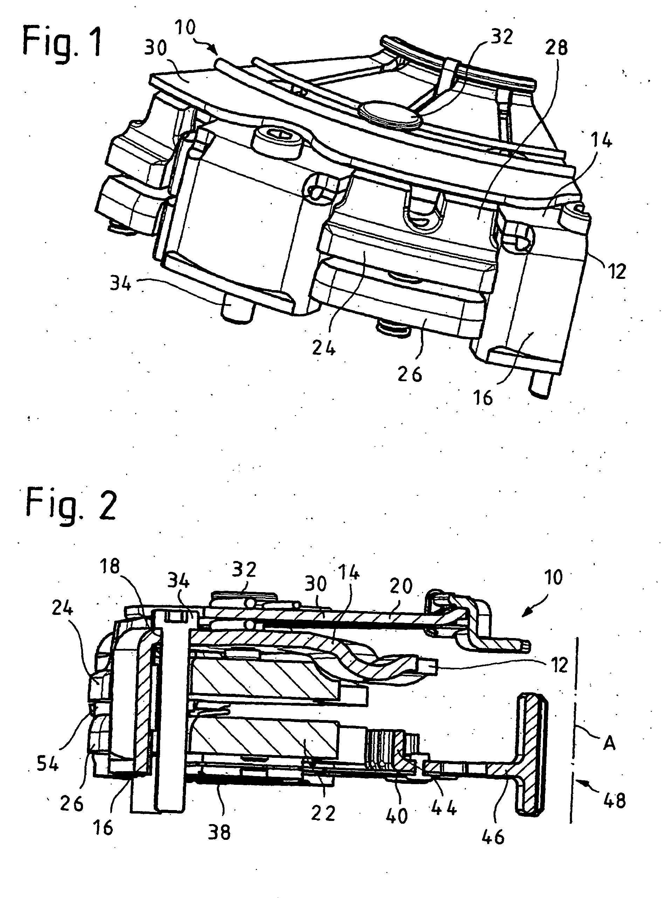

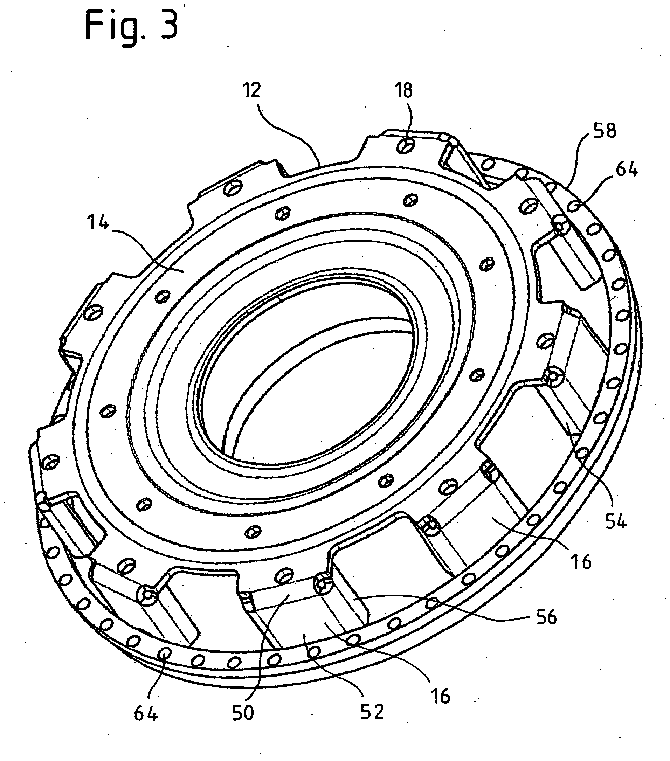

Bevor auf die erfindungsgemäßen Aspekte der in den Figuren gezeigten Druckplattenbaugruppe detailliert eingegangen wird, wird vor allem mit Bezug auf die Fig. 1 und 2 der grundsätzliche Aufbau einer derartigen Druckplattenbaugruppe insofern beschrieben, als er für die vorliegende Erfindung relevant ist. Es sei hier darauf hingewiesen, dass derartige als Druckplattenbaugruppen für Mehrscheibenkupplungen ausgebildete Druckplattenbaugruppen in der DE 199 22 874 A1 und der DE 199 28 710 A1 detailliert dargestellt und beschrieben sind.

Die Druckplattenbaugruppe 10 weist ein allgemein mit 12 bezeichnetes Gehäuse auf, das einen ringartigen Bodenbereich 14 und von diesem in Richtung einer Drehachse A sich im Wesentlichen weg erstreckend eine Mehrzahl von näherungsweise in Achsrichtung sich erstreckenden Verbindungsstegen 16 aufweist. Die mit gegenseitigem Umfangsabstand angeordneten Verbindungsstege sind vorzugsweise mit dem Bodenbereich 14 integral aus einem Blechrohling geformt und durch Umbiegen desselben gestaltet. Im Bereich jedes Verbindungsstegs 16 ist im ringartigen Bodenbereich 14 eine Öffnung 18 gebildet, durch welche hindurch Schraubbolzen geführt werden, um das Gehäuse 12 mit einem an die Verbindungsstege 16 anschließenden Schwungrad o. dgl. fest zu verbinden.

In dem von dem Gehäuse 12 umschlossenen Innenraum sind als Beaufschlagungsplatten eine Anpressplatte 20 und eine Zwischenplatte 22 vorgesehen. Sowohl die Anpressplatte 20 als auch die Zwischenplatte 22 weisen nach radial außen greifende und zwischen jeweils zwei Verbindungsstege 16 des Gehäuses 12 eingreifende Drehkopplungsvorsprünge 24, 26 auf, durch welche eine drehfeste Anbindung der Anpressplatte 20 bzw. der Zwischenplatte 22 an das Gehäuse 12 unter Erhalt einer bestimmten Axialverlagerbarkeit realisiert ist.

Die Anpressplatte 20 weist weiterhin an einer axialen Seite Beaufschlagungsvorsprünge 28 auf, die zugehörige Öffnungen 18 im Bodenbereich 14 durchsetzen und von einem an der Außenseite des Bodenbereichs 14 am Gehäuse 12 getragenen und eine Kraftbeaufschlagungsanordnung bereitstellenden Kraftspeicher 30 beaufschlagt werden. Der beispielsweise als Membranfeder ausgebildete Kraftspeicher 30 ist in an sich bekannter Weise über sog. Distanzbolzen 32 o. dgl. unter Zwischenlagerung von Drahtringen am Bodenbereich 14 getragen und stützt sich somit am Gehäuse 12 einerseits und der Anpressplatte 20 andererseits ab. Durch die Beaufschlagungswirkung des Kraftspeichers 30 beaufschlagt die Anpressplatte 20 die Reibbeläge eines nicht dargestellten ersten Kupplungsscheibenbereichs. Zwischen der Zwischenplatte 22 und dem nicht dargestellten Schwungrad liegen die Reibbeläge 38 eines zweiten Kupplungsscheibenbereichs 40. Radial innen sind die beiden Kupplungsscheibenbereiche über Kopplungselemente miteinander drehfest, jedoch in Richtung der Drehachse A verlagerbar gekoppelt. Ein Kopplungselement 44 ist dann weiterhin mit einem Nabenbereich 46 drehfest verbunden. Durch die Beaufschlagungswirkung des Kraftspeichers 30 beaufschlagen die Anpressplatte 20 und die Zwischenplatte 22 die Reibbeläge 34, 38 der allgemein mit 48 bezeichneten Kupplungsscheibenanordnung, um über einen Reibkraftschluss den Einrückzustand, in welchem ein Drehmoment übertragen werden kann, herzustellen.

Zur Durchführung von Ausrückvorgängen wird bei dem dargestellten Beispiel einer gedrückten Kupplung der Kraftspeicher 30 in seinem radial inneren Bereich in Richtung auf die Kupplungsscheibenanordnung 48 zu gepresst, so dass er radial außen die Anpressplatte 20 freigibt. Durch zwischen der Anpressplatte 20 und der Zwischenplatte 22 einerseits sowie der Zwischenplatte 22 und dem nicht dargestellten Schwungrad andererseits wirkende Lüftfederanordnungen bewegen sich die Anpressplatte 20 und die Zwischenplatte 22 sowie die Zwischenplatte 22 und das nicht dargestellte Schwungrad auseinander, so dass die Reibbeläge freigegeben werden und der Einrückzustand aufgehoben bzw. das Drehmomentübertragungsvermögen gemindert werden kann.

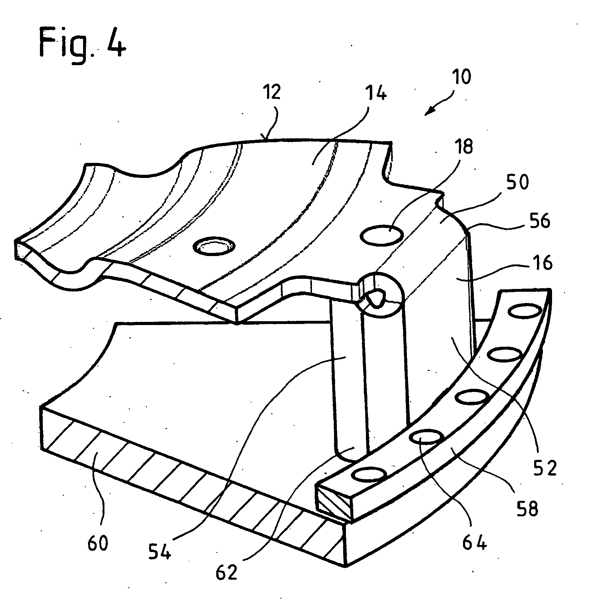

Fig. 3 zeigt die Gehäuseanordnung 12 in perspektivischer Ansicht. Man erkennt den ringartigen Bodenbereich 14 mit den Öffnungen 18 und die Verbindungsstege 16. Wie man auch in der Detailansicht der Fig. 4 noch besser erkennt, sind diese Verbindungsstege 16 durch in einem Biegungsbereich 50 an den Bodenbereich 14 angebundene, axial abgebogene Lappen bereitgestellt, wobei jeder diese Lappen eine Außenumfangswandung 52 und davon nach radial innen abgebogene Seitenwandungen 54 bzw. 56 aufweist. Die Verbindungsstege 16 weisen somit eine im Wesentlichen U-förmige Querschnittkontur auf, Vor allem erkennt man in Fig. 4, dass die dem Bodenbereich 14 nahen Endbereiche der Seitenwandungen 54, 56 so ausgestaltet sein können, dass die Verbindungsstege 16 sich in axialer Richtung wieder am Bodenbereich 14 abstützen, so dass, trotz des Einsatzes vergleichsweise dünnen Blechmaterials für die Gehäuseanordnung 12 eine gewisse Stabilität der Verbindungsstege 16 gegen übermäßige Verformung derselben nach radial innen gegeben ist.

In den Fig. 3 und 4 erkennt man weiter einen die Gehäuseanordnung 1.2 im Bereich der Verbindungsstege 16 radial außen umgebenden Stützring 58. Dieser kann aus Blechmaterial ausgestanzt sein oder kann durch Biegen stangenartigen Materials und Verbinden, beispielsweise Verschweißen, der Endbereiche bereitgestellt sein. Der Stützring 58 ist in Anlage an der Außenumfangsseite, beispielsweiseAußenwandung 52, der Verbindungsstege 16 und ist vorzugsweise mit allen Verbindungsstegen 16 vorzugsweise durch Verschweißen fest verbunden.

Man erkennt in Fig. 4 weiter, dass der Stützring 58 an den Verbindungsstegen 16 in einem vom Bodenbereich 14 axial entfernt liegenden, zur Anlage an der ringscheibenartig ausgestalteten Schwungmassenanordnung 60 ausgebildeten Endbereich 62 an den Verbindungsstegen 16 vorgesehen ist. Somit kann eine Situation geschaffen werden, in welcher bei mit der Schwungmassenanordnung 60 verbundener Gehäuseanordnung 12 auch der Stützring 58 zusammen mit den axialen Endbereichen 62 der Verbindungsstege 16 an der Schwungmassenanordnung 60 anliegt bzw. dazu nur einen geringen Abstand aufweist.

Man erkennt in den Fig. 3 und 4 weiter, dass in dem Stützring 58 in Umfangsrichtung aufeinander folgend vorzugsweise mit gleichmäßigem Abstand mehrere hier durch Axialöffnungen 64 gebildete Aussparungen vorgesehen sind.

Der so aufgebaute Stützring 58 erfüllt an der erfindungsgemäßen Reibungskupplung verschiedene Funktionen. Zunächst trägt er insbesondere auch aufgrund seiner Positionierung und seiner festen Verbindung mit den Verbindungsstegen 16 zu einer erheblichen Versteifung der Gehäuseanordnung 12 bei. Dies ist insbesondere daher von Bedeutung, da dadurch durch die Kraftbeaufschlagungsanordnung bzw. den Kraftspeicher 30 eingeleitete Kräfte nicht mehr zu einer wesentlichen Verformung der Gehäuseanordnung 12 führen werden. Infolgedessen nehmen auch die Endbereiche 62 bzw. die dort gebildeten axialen Stirnflächen der Verbindungsstege 16 bezüglich einander eine Lage ein, die nur ein geringes Nachbearbeiten, beispielsweise Abdrehen, der Verbindungsstege 16 in diesen Endbereichen 62 erfordert, um einen gleichmäßigen Anlagekontakt an der Schwungmassenanordnung 60 zu gewährleisten. Durch die Verbindung der einzelnen Verbindungsstege 16 über den Stützring 58 wird ferner erreicht, dass bei der Durchführung eines derartigen Nachbearbeitungsvorgangs keine ungewollten Verbiegungen der Verbindungsstege 1 6 erzeugt werden.

Eine weitere Funktion, die der Stützring 58 mit seinen Öffnungen 64 erfüllen kann, ist, dass in Zuordnung zu zumindest drei dieser definiert am Stützring 58 vorgesehenen Öffnungen 64 auch in der Schwungmassenanordnung 60 entsprechende Öffnungen oder Aussparungen bereitgehalten werden können. In diese Öffnungen und die im Stützring 58 vorgesehenen zugeordneten Öffnungen 64 können dann Passstifte eingesetzt werden, so dass die Druckplattenbaugruppe 10 definiert bezüglich der Schwungmassenanordnung 60 zentriert und dann mit dieser durch Verschraubung fest verbunden werden kann. Zusätzliche beispielsweise durch Drehbearbeitung an der Schwungmassenanordnung vorzusehende Zentriervorsprünge o.dgl. sind dann nicht erforderlich. Weiter ist es möglich, in die oder einen Teil der Öffnungen 64 vor oder nach dem Verbinden der Druckplattenbaugruppe 10 mit der Schwungmassenanordnung 60 Auswuchtgewichte einzusetzen, um eine zuvor erfasste Unwucht kompensieren zu können. Hier können Masseteile in die Öffnungen 64 eingesetzt und eingeklebt oder in sonstiger Weise festgelegt werden. Auch ist es möglich, durch definiertes Bilden derartiger Öffnungen Masse abzuheben und auch somit Unwuchten zu beseitigen. Ferner kann am Stützring 58 zumindest eine Markierung vorgesehen sein, die durch einen Sensor abtastbar ist, beispielsweise einen elektromagnetisch wirkenden Sensor, so dass eine Drehzahl bzw. Drehlageerfassungsfunktion in die Druckplattenbaugruppe integriert werden kann. Die Öffnungen 64 können selbstverständlich über den Umfang verteilt mit verschiedenen Abmessungen und Formgebungen bereitgestellt werden, was insbesondere zur Erfüllung der Funktion zur Aufnahme von Auswuchtmassen verschiedener Größen vorteilhaft sein kann.

Im Kupplungsbetrieb hat der Stützring 58 den weiteren elementaren Funktionsbestandteil, dass er die einen Teil des Drehmoments übertragenden Verbindungsstege 16 untereinander koppelt, so dass auch hier eine erhöhte Stabilität in der Gehäuseanordnung 12 vorgesehen ist. Auch ist eine Abstützung der Verbindungsstege 16 nach radial außen realisiert.

Eine weitere Funktion, die dieser Stützring erfüllen kann, ist, dass eine Transportsicherungsanordnung an dem Stützring 58 vorgesehen sein kann, um dafür zu sorgen, dass vor dem Zusammensetzen der Druckplattenbaugruppe 10 mit der Schwungmassenanordnung 60 die in der Druckplattenbaugruppe vorgesehenen Komponeten, insbesondere die beiden Beaufschlagungsplatten 20, 22 und die zugeordneten Kupplungsscheibenanordnungen nicht ungewollt aus dem Bereich der Gehäuseanordnung 12 heraus bewegt werden können. Auch kann der Stützring in Zusammenwirkung mit den Drehkopplungsvorsprüngen 24, 26 selbst diese Transportsicherungsfunktion übernehmen.

Selbstverständlich kann bei der erfindungsgemäßen Reibungskupplung der Stützring 58 auch in anderer Art und Weise mit den Verbindungsstegen 16 verbunden werden. Beispielsweise bei der dargestellten geschlossenen, kreisringartigen Ausgestaltung des Stützrings 58 ist ein Aufschrumpfen oder Aufschieben mit Presspassung möglich, so dass der Stützring 58 die Verbindungsstege 16 nach radial innen beaufschlagt. Hierbei kann die vorangehend angesprochene Abstützwirkung im Bereich der Seitenwände 54, 56 sich vorteilhaft bemerkbar machen, da auf diese Art und Weise eine Aufspreizwirkung der Verbindungsstege 16 nach radial außen bereitgestellt werden kann, wenn eine entsprechende Kraft nach radial innen wirkt. Weiterhin ist es grundsätzlich auch denkbar, den Stützring 58 nicht als geschlossenen Kreisring, sondern als Ringsegment oder mehrere Ringsegmente auszugestalten, so dass jeweils Gruppen von Verbindungsstegen, also zumindest zwei Verbindungsstege, durch derartige Ringsegmente miteinander gekoppelt sind. Auch dadurch lassen sich die vorangehend angesprochenen Effekte erzielten, wenn auch in etwas abgeminderter Form.

## Patentansprüche

1. Reibungskupplung, umfassend eine Druckplattenbaugruppe (10) mit
- einer Gehäuseanordnung (12), welche mit einer Schwungmassenanordnung (60) zur gemeinsamen Drehung um eine Drehachse (A) verbunden oder verbindbar ist und welche einen ringartigen Bodenbereich (14) sowie eine Mehrzahl von sich von dem ringartigen Bodenbereich (14) weg erstreckenden und einen gegenseitigen Umfangsabstand aufweisenden Verbindungsstegen (16) aufweist, die in einem von dem Bodenbereich (14) entfernten axialen Endbereich (62) zur Anlage an der Schwungmassenanordnung (60) vorgesehen sind,
- wenigstens einer Beaufschlagungsplatte (20, 20), die eine Mehrzahl von jeweils zwischen zwei Verbindungsstege (16) eingreifenden Drehkopplungsvorsprüngen (24, 26) aufweist,
- eine sich bezüglich des Bodenbereichs (14) der Gehäuseanordnung (12) abstützende Kraftbeaufschlagungsanordnung (30), durch welche die wenigstens eine Beaufschlagungsplatte (20, 22) in gegenseitige Anlage mit wenigstens einer Kupplungsscheibenanordnung bringbar ist,
- sowie eine im Wesentlichen ringscheibenartige Schwungmassenanordnung (60),
einem ringartigen Stützelement (58), das wenigstens einen Teil der Verbindungsstege (16) an ihrer Außenumfangsseite umgibt und daran in Anlage ist **dadurch gekennzeichnet, dass** das Stützelement (58) eine Mehrzahl von Aussparungen (64) aufweist, wobei die Schwungmassenanordnung (60) eine Mehrzahl von Zentrieröffnungen für eine jeweilige Aussparung (64) in dem Stützelement (58) durchsetzende Zentrierelemente aufweist.

2. Reibungskupplung nach Anspruch 1,
**dadurch gekennzeichnet, dass** das Stützelement (58) in dem vom Bodenbereich (14) entfernten axialen Endbereich (62) der Verbindungsstege (16) vorgesehen ist.

3. Reibungskupplung nach Anspruch 1 oder 2,
**dadurch gekennzeichnet, dass** das Stützelement (58) mit mehreren der Verbindungsstege (16) fest verbunden ist.

4. Reibungskupplung nach Anspruch 3,
**dadurch gekennzeichnet, dass** das Stützelement (58) mit den Verbindungsstegen (16) verschweißt ist.

5. Reibungskupplung nach einem der Ansprüche 1 bis 3,
**dadurch gekennzeichnet, dass** das Stützelement (58) einen Kreisring bildet und an den Außenumfangsseiten der Verbindungsstege (16) diese nach radial innen beaufschlagend anliegt.

6. Reibungskupplung nach Anspruch 5,
**dadurch gekennzeichnet, dass** das Stützelement (58) auf die Gehäuseanordnung (12) aufgeschrumpft ist.

7. Reibungskupplung nach Anspruch 1,
**dadurch gekennzeichnet, dass** wenigstens ein Teil der Aussparungen (64) das Stützelement (58) axial vollständig durchdringt.

## Claims

1. Friction clutch, comprising a pressure plate assembly (10) with
- a housing arrangement (12), which is or can be connected to a centrifugal mass arrangement (60) for their common rotation about an axis of rotation (A) and which has an annular base area (14) together with multiple connecting webs (16) extending away from the annular base area (14) at a circumferentially spaced interval from one another, which are intended to rest against the centrifugal mass arrangement (60) in an axial end area (62) remote from the base area (14),
- at least one actuating plate (20, 22), which has multiple rotary coupling projections (24, 26) each engaging between two connecting webs (16),
- a force application arrangement (30) which is braced in relation to the base area (14) of the housing arrangement (12) and which serves to bring one or more actuating plates (20, 22) into reciprocal contact with at least one clutch disc arrangement,
- a substantially annular centrifugal mass arrangement (60),
- and an annular support element (58), which encloses at least some of the connecting webs (16) on their outer circumferential side and is in contact therewith,
**characterized in that** the support element (58) has multiple openings (64), the centrifugal mass arrangement (60) having multiple centring apertures for centring elements passing through each opening (64) in the support element (58).

2. Friction clutch according to Claim 1, **characterized in that** the support element (58) is provided in the axial end area (62) of the connecting webs (16) remote from the base area (14).

3. Friction clutch according to Claim 1 or 2, **characterized in that** the support element (58) is firmly connected to more than one of the connecting webs (16)

4. Friction clutch according to Claim 3, **characterized in that** the support element (58) is welded to the connecting webs (16).

5. Friction clutch according to any one of Claims 1 to 3, **characterized in that** the support element (58) forms a circular ring and bears against the outer circumferential sides of the connecting webs (16), pressing these radially inwards.

6. Friction clutch according to Claim 5, **characterized in that** the support element (58) is shrunk onto the housing arrangement (12).

7. Friction clutch according to Claim 1, **characterized in that** at least some of the openings (64) pass axially right through the support element (58).

## Revendications

1. Embrayage à friction, comprenant un ensemble (10) de plateau de pression avec
- un ensemble de carter (12), qui est ou peut être relié à un ensemble (60) de masse d'inertie pour tourner conjointement autour d'un axe de rotation (A) et qui présente une région de fond annulaire (14) ainsi qu'une pluralité de nervures de liaison (16) s'étendant en éloignement de la région de fond annulaire (14) et présentant une distance circonférentielle mutuelle qui, dans une région terminale axiale (62) éloignée de la région de fond (14), sont prévues pour s'appliquer contre l'ensemble (60) de masse d'inertie,
- au moins un plateau de sollicitation (20, 22), qui présente une pluralité de saillies (24, 26) d'accouplement en rotation qui s'engagent chacune entre deux nervures de liaison (16),
- un ensemble (30) de sollicitation en force qui s'appuie par rapport à la région de fond (14) de l'ensemble de carter (12) et par lequel l'au moins un plateau de sollicitation (20, 22) peut être amené en application mutuelle avec au moins un ensemble de disque d'embrayage,
- ainsi qu'un ensemble (60) de masse d'inertie essentiellement en forme de couronne,
- un élément de soutien annulaire (58), qui entoure au moins une partie des nervures de liaison (16) sur leur face périphérique extérieure et s'y trouve en application,
**caractérisé en ce que** l'élément de soutien (58) présente une pluralité d'évidements (64), sachant que l'ensemble (60) de masse d'inertie présente une pluralité d'ouvertures de centrage pour des éléments de centrage traversant chacun un évidement respectif (64) dans l'élément de soutien (58).

2. Embrayage à friction selon la revendication 1, **caractérisé en ce que** l'élément de soutien (58) est prévu dans la région terminale axiale (62) des nervures de liaison (16) qui est éloignée de la région de fond (14).

3. Embrayage à friction selon la revendication 1 ou 2, **caractérisé en ce que** l'élément de soutien (58) est fixement relié à plusieurs des nervures de liaison (16).

4. Embrayage à friction selon la revendication 3, **caractérisé en ce que** l'élément de soutien (58) est soudé aux nervures de liaison (16).

5. Embrayage à friction selon l'une quelconque des revendications 1 à 3, **caractérisé en ce que** l'élément de soutien (58) forme un anneau de cercle et s'applique contre les faces périphériques extérieures des nervures de liaison (16) en les sollicitant radialement vers l'intérieur.

6. Embrayage à friction selon la revendication 5, **caractérisé en ce que** l'élément de soutien (58) est fretté sur l'ensemble de carter (12).

7. Embrayage à friction selon la revendication 1, **caractérisé en ce qu'**au moins une partie des évidements (64) traverse axialement totalement l'élément de soutien (58).
